# EUROPEAN PATENT APPLICATION

(11) **EP 3 413 613 A1**
(43) Date of publication of application: **12.12.2018**
(21) Application number: 17747451.7
(22) Date of filing: 01.02.2017
(51) Int. Cl.: H04W 24/10, H04B 17/309, H04J 99/00, H04W 52/34, H04W 52/38, H04W 72/12

(54) **BASE STATION, USER DEVICE, POWER RATIO APPLICATION METHOD, AND CHANNEL STATE INFORMATION TRANSMISSION METHOD**

(30) Priority: 04.02.2016 JP 2016020329
(71) Applicant: NTT DOCOMO, INC., Chiyoda-ku Tokyo 100-6150 (JP)
(72) Inventor: SANO, Yousuke, Tokyo 100-6150 (JP); TAKEDA, Kazuaki, Tokyo 100-6150 (JP); NAGATA, Satoshi, Tokyo 100-6150 (JP); CHEN, Xiaohang, Beijing 100190 (CN); LI, Anxin, Beijing 100190 (CN); JIANG, Huiling, Beijing 100190 (CN)
(74) Representative: Hoffmann Eitle
(86) International application number: PCT/JP2017/003578
(87) International publication number: WO 2017/135295

(57) **Abstract**

A base station used in a radio communication system in which multiplexing in a power region is performed includes a transmitting unit that transmits a power ratio used for a user equipment to calculate channel state information to the user equipment and a receiving unit that receives the channel state information calculated using the power ratio from the user equipment.

## Description

### TECHNICAL FIELD

The present invention relates to a radio communication system to which Non-Orthogonal Multiple Access (NOMA) is applied.

### BACKGROUND ART

Non-Orthogonal Multiple Access (NOMA) is under review in 5G which is a next generation mobile communication system. NOMA is a multiple access technique of multiplexing signals addressed to a plurality of user equipments UEs (hereinafter, referred to as "UEs") in a cell onto the same resources at a base station eNB (hereinafter, "eNB") side and simultaneously transmitting the signals. As a result, further improvement in frequency use efficiency is expected.

A basic principle of a downlink of NOMA will be described with reference to Figs. 1 and 2A-C (for example, Non-Patent Document 1). A UE 1 close to an eNB and a UE 2 near a cell edge are illustrated in Fig. 1.

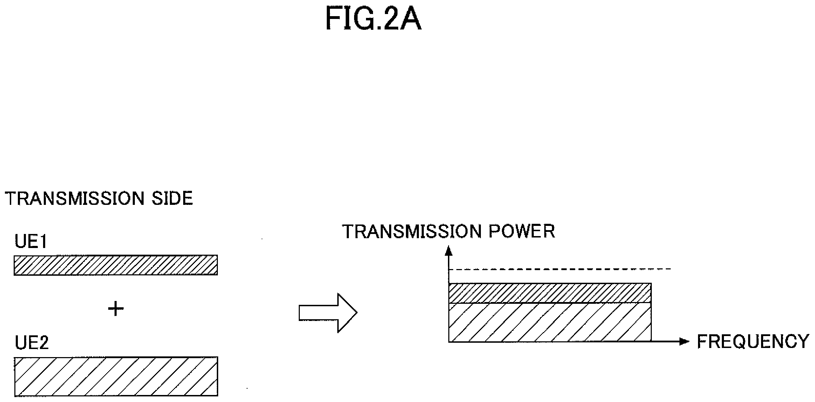

The eNB selects the UE 1 and the UE 2 as a pair, multiplexes a signal of the UE 1 and a signal of the UE 2 using the same resource and simultaneously transmits the signals as illustrated in Fig. 2A. At this time, high power is allocated to the UE 2 at the cell edge, and low power is allocated to the UE 1 near the cell center.

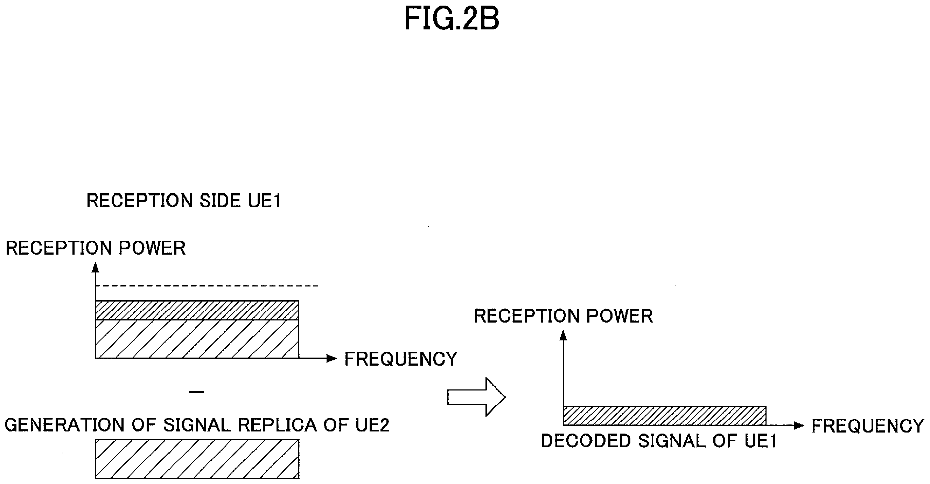

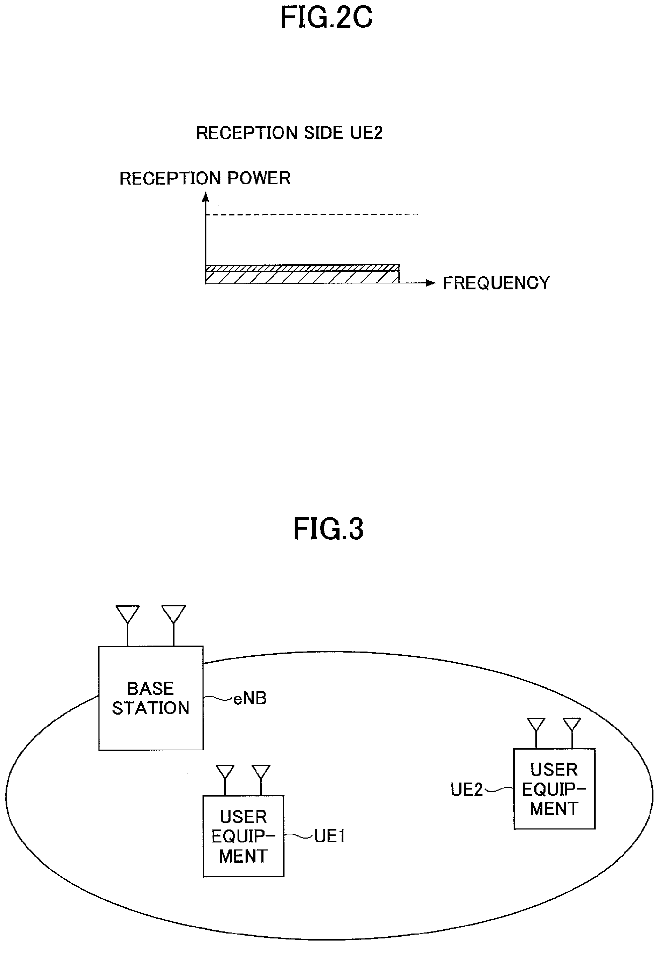

A signal addressed to the UE 1 and a signal addressed to the UE 2 arrive at the UE 1 near the cell center in a multiplexed form, but as illustrated in Fig. 2B, the signal of the UE 1 can be decoded by removing the signal of the UE 2 through an interference cancellation process. On the other hand, for the UE 2 at the cell edge, since low power is allocated to the signal of the UE 1 serving as interference to the UE 2, the signal of the UE 1 becomes very weak as illustrated in Fig. 2C. Therefore, the UE 2 can directly decode the signal addressed to the UE 2 without performing the interference cancellation process. As described above, in NOMA, multiplexing in the power region is performed, but the technique of performing multiplexing in the power region is not limited to NOMA.

Further, MIMO introduced into an LTE system can be combined with NOMA, and in this case, it is possible to further improve system performance. In downlink MIMO specified in LTE, in order to improve a reception SINR, precoding (an adjustment of a phase and an amplitude) is used, and a precoded signal is applied to each antenna.

### CITATION LIST

### NON-PATENT DOCUMENT

Non-Patent Document 1: NTT DOCOMO Technical Journal VOl. 23 No. 4
Non-Patent Document 2: R1-153332

### SUMMARY OF THE INVENTION

### PROBLEM TO BE SOLVED BY THE INVENTION

In LTE, it is specified that a UE reports channel state information (CSI) to an eNB. Examples of the CSI include a rank indicator (RI), a precoding matrix indicator (PMI), and a channel quality information (CQI), and the UE calculates an SINR for each applicable RI and each applicable PMI using, for example, a channel estimation value, a reception weight for demodulation, or the like and calculates an RI and a PMI in which a data rate estimated from the SINR is maximum. Further, the UE calculates a CQI corresponding to the SINR calculated from the RI and the PMI and reports them to the eNB as the CSI.

As described above, in NOMA, part of total power of resources transmitted to the UE is allocated to the UE, and a value of the total power is used for calculating the CQI.

Here, the eNB to which NOMA is applied is assumed to calculate the SINR based on the CQI which is calculated by a technique of a related art and reported from the UE, decides a pair of UEs, and decide power of each of a pair of UEs (Non-Patent Document 2).

However, when MIMO such as SU-MIMO is applied to NOMA, inter-stream interference decreases due to power reduction of a desired signal in the UE, and as a result, it is thought that selection of the RI/PMI in the UE is affected. Therefore, the CQI calculated based on the RI/PMI selected in view of power reduction (which is not currently calculated in the UE) is likely to be different from the CQI estimated for NOMA from the conventional CQI in the eNB. In other words, the eNB is unable to appropriately estimate the reception quality (the SINR, the CQI, and the like) in the UE, and there is a possibility that optimum scheduling will not be performed.

The present invention has been made in light of the foregoing, and it is an object of the present invention to provide a technique capable of enabling a base station to appropriately estimate the reception quality in a user equipment in a radio communication system in which multiplexing in the power region is performed.

### MEANS FOR SOLVING PROBLEM

According to a technique of the disclosure disclosed in this specification, provided is a base station used in a radio communication system in which multiplexing in a power region is performed, including: a transmitting unit that transmits a power ratio used for a user equipment to calculate channel state information to the user equipment; and a receiving unit that receives the channel state information calculated using the power ratio from the user equipment.

Further, according to a technique of the disclosure, provided is a user equipment used in a radio communication system in which multiplexing in a power region is performed, including: a receiving unit that receives a power ratio used for calculating channel state information from a base station; and a transmitting unit that calculates the channel state information using the power ratio and transmits the channel state information to the base station.

Further, according to a technique of the disclosure, provided is a power ratio application method performed by a base station used in a radio communication system in which multiplexing in a power region is performed, including: a transmission step of transmitting a power ratio used for a user equipment to calculate channel state information to the user equipment; and a reception step of receiving the channel state information calculated using the power ratio from the user equipment.

Further, according to a technique of the disclosure, a channel state information transmission method performed by a user equipment used in a radio communication system in which multiplexing in a power region is performed, including: a reception step for receiving a power ratio used for calculating channel state information from a base station; and a transmission step of calculating the channel state information using the power ratio and transmitting the channel state information to the base station.

### EFFECT OF THE INVENTION

According to the technique of the disclosure, a base station can appropriately estimate the reception quality in a user equipment in a radio communication system in which multiplexing in the power region is performed.

### BRIEF DESCRIPTION OF DRAWINGS

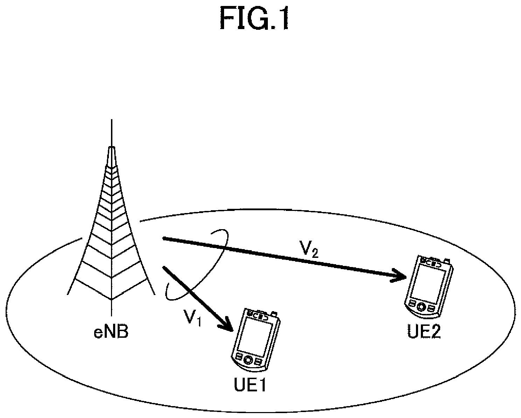

Fig. 1 is a diagram for describing a basic principle of NOMA;
Fig. 2A is a diagram for describing a basic principle of NOMA;
Fig. 2B is a diagram for describing a basic principle of NOMA;
Fig. 2C is a diagram for describing a basic principle of NOMA;
Fig. 3 is a configuration diagram of a radio communication system according to an embodiment of the present invention;
Fig. 4 is a sequence diagram illustrating a flow of a process according to the present embodiment;
Fig. 5 is a diagram illustrating an example of a CSI report;
Fig. 6 is a diagram for describing an example of a CQI calculation method;
Fig. 7 is a diagram for describing an example of a CQI calculation method;
Fig. 8 is a diagram for describing an example of a CQI calculation method;
Fig. 9 is a flowchart illustrating a process of determining a power ratio used for a CSI report;

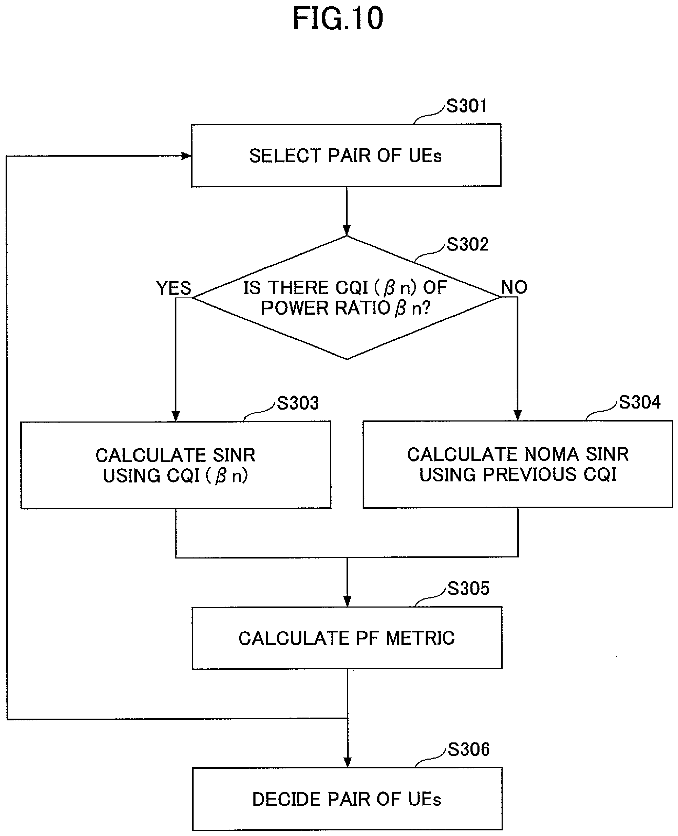

Fig. 10 is a flowchart illustrating a scheduling operation;
Fig. 11 is a configuration diagram of a user equipment UE;
Fig. 12 is a HW configuration diagram of a user equipment UE;
Fig. 13 is a configuration diagram of a base station eNB; and
Fig. 14 is a HW configuration diagram of a base station eNB.

### MODE(S) FOR CARRYING OUT THE INVENTION

Hereinafter, an exemplary embodiment of the present invention will be described with reference to the appended drawings. An embodiment to be described below is merely an example, and an embodiment to which the present invention is applied is not limited to the following embodiment. For example, a mobile communication system according to the present embodiment is assumed to be a system of a scheme conforming to LTE, but the present invention is not limited to LTE but is applicable to other schemes. Further, in this specification and claims, "LTE" is used in a broad sense including communication schemes (including 5G) corresponding to Rel-12, 13, 14, or later of 3GPP.

### (System configuration)

Fig. 3 is a configuration diagram of a radio communication system according to an embodiment of the present invention. As illustrated in Fig. 3, the radio communication system of the present embodiment includes a base station eNB (hereinafter, "eNB"), a user equipment UE 1 close to the eNB (hereinafter, "UE 1"), and a user equipment UE 2 at a cell edge (hereinafter, "UE 2"). The eNB and the UEs have at least functions of LTE and a function of performing NOMA to which MIMO is applied.

As described above, NOMA is a multiple access technique of multiplexing signals addressed to a plurality of UEs in a cell onto the same resources at the eNB side and transmitting the signals at the same time, and multiplexing of user signals in the power region is performed. The user signals multiplexed in the power region are separated by power distribution between paired users and application of the interference cancellation function in the UE. The technique of performing multiplexing in the power region is not limited to NOMA.

A large number of UEs exist in the cell of the eNB, but in Fig. 3, the UE 1 and the UE 2 are illustrated as examples.

In the present embodiment, the UE calculates the CSI using power of a power ratio in which power allocation in NOMA is assumed (total power × power ratio) and reports the CSI to the eNB. The "total power" is transmission power of the eNB when a signal is transmitted to the UE using frequency resources allocated to the UE. A detailed description will be made below with reference to a sequence diagram and the like.

### (Process sequence)

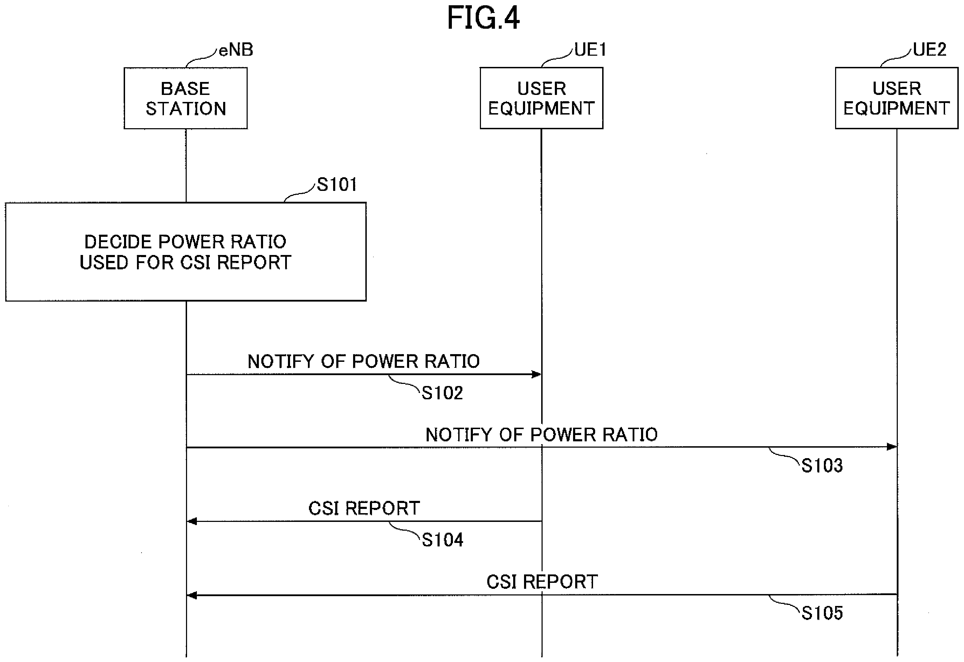

A flow of a process according to the present embodiment will be described with reference to Fig. 4. In the present embodiment, as illustrated in Fig. 4, first, the eNB decides a power ratio that each UE uses for a CSI calculation (step S101). The number of power ratios to be determined may be one or two or more. A power ratio that is highly likely to be allocated to the UE when NOMA is applied is decided as the power ratio.

In step S102, the eNB notifies the UE 1 of the power ratio to be used for the CSI calculation, and in step S103, the eNB notifies the UE 2 of the power ratio used for the CSI calculation.

In step S104, the UE 1 reports CSI calculated from total power in the related art and CSI calculated using the power ratio notified of from the eNB to the eNB. In step S105, the UE 2 reports CSI calculated based on the previous total power and CSI calculated using the power ratio notified of from the eNB to the eNB. In the present embodiment, when the notification of the power ratio is received, the UE performs the CSI calculation using the power ratio, but for example, due to a configuration performed by higher layer signaling from the eNB, even when the notification of the power ratio is received, the UE may not perform the CSI calculation using the power ratio.

Further, the eNB may give a notification of the power ratio only to the UEs which are close to the eNB and greatly affected by power reduction (for example, the UEs whose power ratio decided in step S101 is smaller than a predetermined threshold) so that the CSI calculation is performed using the power ratio.

Further, the decision of the power ratio and the notification to the UE by the eNB may be performed semi-statically (for example, periodically) or may be performed according to a request from the UE, or may be performed at a timing at which the UE is connected to the eNB.

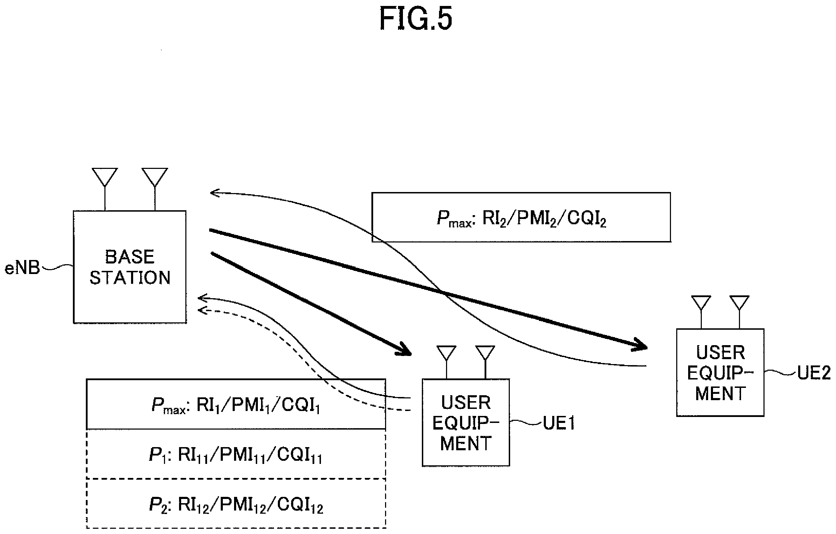

Fig. 5 illustrates an example of a CSI report. In this example, only the UE 1 of the UE 1 and the UE 2 performs the CSI report using the power ratio.

In the example illustrated in Fig. 5, the UE 1 receives a notification of two power ratios (P₁ and P₂ when indicated by power (total power × power ratio)). Therefore, the UE 1 reports CSI based on total power (full power), CSI based on PI, and CSI based on P2. On the other hand, the UE 2 reports only the CSI based on the total power.

Since the CSI calculated based on the power ratio is reported to the eNB as described above, the eNB can more accurately estimate the reception quality (the CQI and the like) in the UE and can perform more appropriate scheduling. Accordingly, communication performance of individual UEs is improved, and performance of the entire system is improved.

### (CSI calculation method)

Here, an example of a CSI calculation method in the UE will be described. First, an example in which the total power is used will be described. Here, a case of two-layer MIMO will be described as an example.

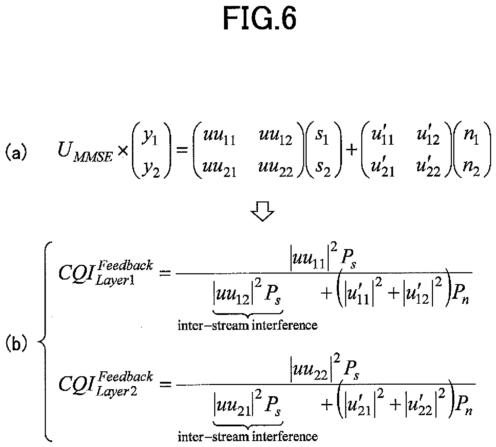

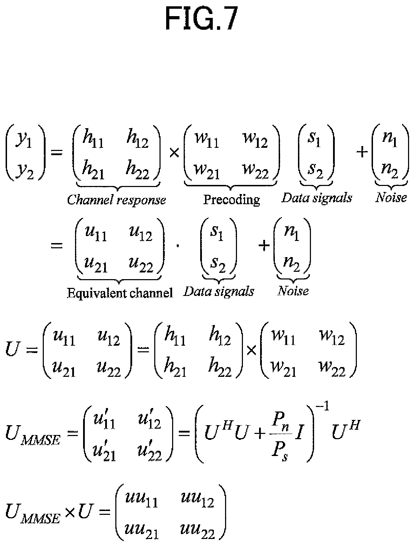

As illustrated in Fig. 6(a), a signal of each layer is obtained by multiplying a reception signal by an MMSE reception weight matrix U_{MMSE}. Then, the CQI of each layer is calculated as illustrated in Fig. 6(b). A meaning of each term in Fig. 6(a) is illustrated in Fig. 7. Since a channel estimation value matrix (channel response) in Fig. 7 is generally unknown to the UE side, it may be estimated using, for example, a pilot signal transmitted together with a data signal. Each of Pₙ and P_{S} in Figs. 6 and 7 indicates average power of noise and a transmission signal (a data signal), and I indicates a unit matrix. U^{H} indicates a Hermitian transposed matrix of a matrix U.

The UE obtains CQI for each applicable PMI and reports a PMI in which the CQI is maximum and a corresponding CQI to the eNB.

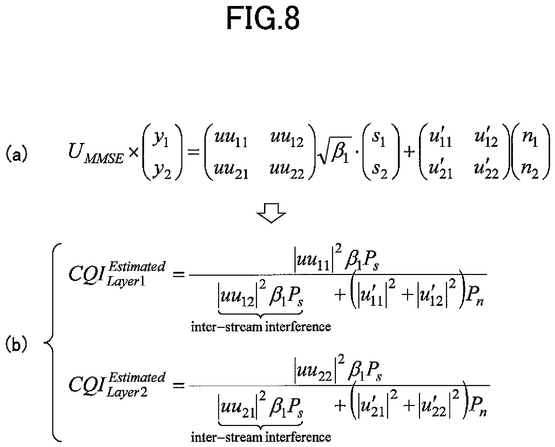

Here, when the power ratio (ratio when a total ratio is 1) in the UE 1 is assumed to be β₁, it is possible to estimate the CQI in which the power ratio is considered, for example, as illustrated in Fig. 8. In other words, the power ratio is reflected by multiplying the transmission signal by the root of the power ratio. The UE obtains CQI for each applicable PMI and reports a PMI in which the CQI is maximum and a corresponding CQI to the eNB. Formula of Fig. 8 is an example.

In the present embodiment, since a notification of β₁ is given from the eNB to the UE 1 as described above, the CSI such as the PMI, the CQI, and the like is calculated using β₁ and reported to the eNB. Further, when a plurality of power ratios are designated, the CSI is calculated for each power ratio and reported.

### (Power ratio decision method)

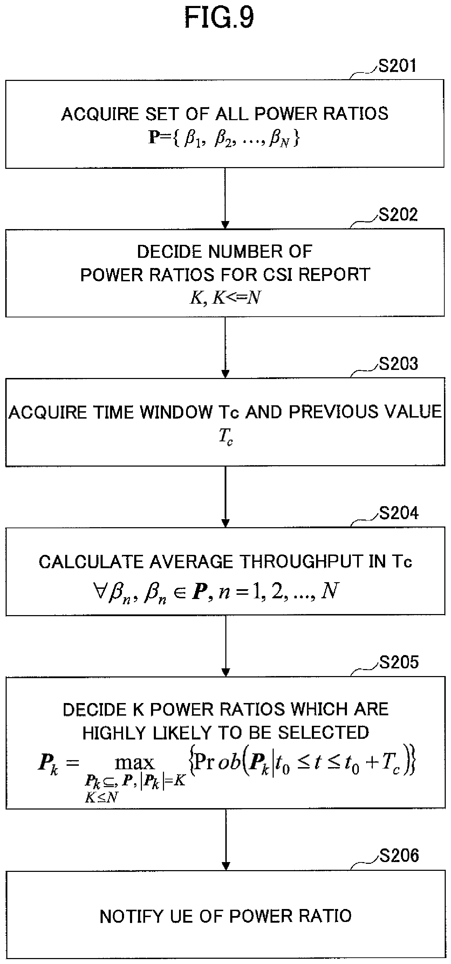

An example of a method of deciding the power ratio used for the CSI calculation in a certain UE will be described with reference to a flowchart of Fig. 9.

Here, for example, a set of power ratios is defined with a step of 0.05 (0.05, 0.1, ...), and in step S201, the eNB acquires a set P (acquires from a memory).

In step S202, the number of power ratios which a notification target UE is notified of is decided. The number is indicated as K. K may be decided based on a capability of the UE or may be decided based on a history of the power ratio used in the past in the base station. Further, a fixed value may be used as K.

In step S203, a time window Tc is set. Tc may be a fixed time length or a time length of a length which is proportional to K. Then, the eNB acquires a value such as the CQI which is acquired in a period of Tc in the past for the notification target UE and retained (the CSI reported from the UE in the past).

In step S204, an average throughput in Tc is calculated for each power ratio βₙ in the power ratio set P based on the value acquired in step S203 for the notification target UE. Then, in step S205, K sets of βₙ which is highly likely to be selected are decided for the notification target UE. βₙ which is highly likely to be selected is, for example, βₙ in which an average throughput is higher than a predetermined threshold value.

As a process of steps S203 to S205, scheduling may be performed according to a proportional fairness (PF) metric obtained from an average throughput or the like based on previous values (for example, Non-Patent Document 2), and K pieces of βₙ which are allocated to the notification target UE may be selected in the descending order of frequencies. In step S206, a notification of the decided power ratio is given to the target UE.

The above example is merely an example. For example, a predetermined number of power ratios may be decided for the CSI report in advance, and a notification of the power ratios may be given.

### (Scheduling)

Next, an example of a scheduling operation of deciding a pair of UEs and power ratios to be allocated in the eNB will be described. A basic flow of scheduling to be described below is based on Non-Patent Document 2.

First, one pair of UE pairs is selected (step S301).

Then, it is determined whether or not there is CQI reported using the power ratio (βₙ) for one power ratio set selected from a set of predetermined power ratio sets (for example, (0.05, 0.95), (0.1, 0.9), ...) for each of a pair of UEs (step S302). As an example, if a pair is constituted by the UE 1 (the UE having high CQI) and the UE 2 (the UE having lower CQI), and the power ratio set is (0.1, 0.9), it is determined whether or not CQI using the power ratio "0.1" is reported for the UE 1, and it is determined whether or not CQI using the power ratio "0.9" is reported for the UE 2.

For the UE having the CQI calculated using the power ratio (βₙ) (which is indicated by CQI (βₙ)), the SINR is calculated using the CQI (βₙ) (step S303). On the other hand, for the UE having no CQI for the power ratio (βₙ), the SINR is calculated using the conventional CQI (and the power ratio) (step S304).

Then, throughput of each UE (instantaneous throughput and average throughput) is calculated from the SINR, and a PF metric of a pair of UEs is calculated (step S305). Steps S302 to S305 are performed for each power ratio set in a set of predetermined power ratio sets.

After steps S302 to S305 are performed on all the predetermined power ratio sets, a similar process is performed for a next pair of UEs.

When the above calculation for all pairs of UEs end, a pair of UEs and the power set in which the PF metric is maximum are decided (step S306). Further, only the PF metric when there is the CQI (βₙ) in the UE having the higher CQI in a pair of UEs may be the PF metric serving as a target of step S306.

### (Device configuration)

Next, configuration examples of the UE and the eNB according to an embodiment of the present invention will be described.

### <User equipment UE>

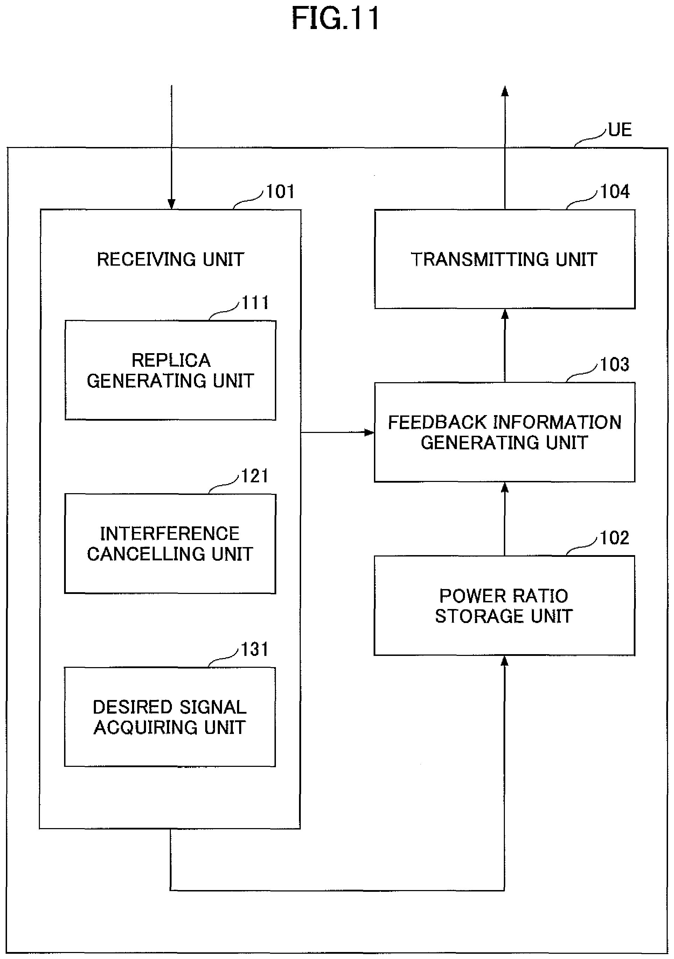

Fig. 11 illustrates a functional configuration diagram of the UE. Fig. 11 corresponds to a configuration of the UE 1 close to the eNB. However, the UE 2 may have a similar configuration. Further, the example illustrated in Fig. 11 is an example in which signal (interference) cancellation of the other UE constituting a pair is performed using successive interference cancellation (SIC). Signal (interference) cancellation can be performed by any other method than the SIC.

As illustrated in Fig. 11, the UE includes a receiving unit 101, a power ratio storage unit 102, a feedback information generating unit 103, and a transmitting unit 104. The receiving unit 101 includes a replica generating unit 111, an interference cancelling unit 121, and a desired signal acquiring unit 131. Fig. 11 illustrates only functional units of the UE particularly related to the present invention, and functions (not illustrated) for performing at least operations conforming to LTE are also provided.

The receiving unit 101 includes a function of receiving various downlink signals from the eNB and acquiring information of a higher layer from a received signal of a physical layer. In the receiving unit 101, first, a signal having strong reception power addressed to the UE 2 is decoded, and the replica generating unit 111 generates a replica of the signal of the UE 2 from the corresponding signal. The interference cancelling unit 121 separates the signal addressed to the UE 2 by subtracting the replica from the reception signal. Then, the desired signal acquiring unit 131 decodes a desired signal.

The power ratio storage unit 102 acquires and retains the power ratio for the CSI calculation received from the eNB.

The feedback information generating unit 103 calculates the CSI (the RI, the PMI, the CQI, and the like) to be reported to the eNB for each power ratio stored in the power ratio storage unit 102. Further, the feedback information generating unit 103 also calculates the CSI using the total power that does not use the power ratio stored in the power ratio storage unit 102. When the power ratio is not stored in the power ratio storage unit 102 (when a notification of the power ratio is not given from the eNB), the feedback information generating unit 103 calculates only the CSI using the total power.

Each CSI calculated by the feedback information generating unit 103 is transmitted through the transmitting unit 104. The transmitting unit 104 has a function of generating various kinds of signals of the physical layer from information of the higher layer to be transmitted from the UE and transmitting the signals to the eNB.

The entire configuration of the UE illustrated in Fig. 11 may be implemented entirely by a hardware circuit (for example, one or more IC chips), or a part of the configuration of the UE may be implemented by a hardware circuit, and the other parts may be implemented by a CPU and a program.

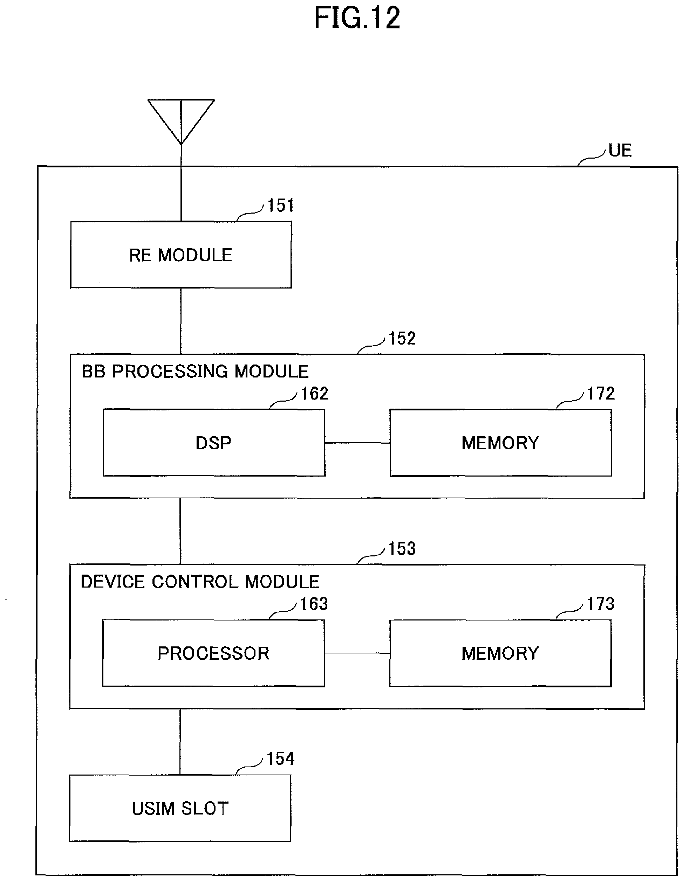

Fig. 12 is a diagram illustrating an example of a hardware (HW) configuration of the UE. Fig. 12 illustrates a configuration that is closer to an implementation example than Fig. 11. As illustrated in Fig. 12, the UE includes a radio equipment (RE) module 151 that performs processing relating to radio signals, a baseband (BB) processing module 152 that performs baseband signal processing, a device control module 153 that performs processing of a higher layer or the like, and a USIM slot 154 which is an interface for accessing a USIM card.

The RE module 151 performs digital-to-analog (D/A) conversion, modulation, frequency transform, power amplification, and the like on digital baseband signals received from the BB processing module 152 and generates radio signals to be transmitted from an antenna. Further, the RE module 151 performs frequency transform, analog to digital (A/D) conversion, demodulation, and the like on radio signals received from the antenna, generates digital baseband signals, and transfers the digital baseband signals to the BB processing module 152. For example, the RE module 151 includes functions of the physical layer or the like in the transmitting unit 104 and the receiving unit 101 of Fig. 11.

The BB processing module 152 performs a process of converting an IP packet into a digital baseband signal and vice versa. A digital signal processor (DSP) 162 is a processor that performs signal processing in the BB processing module 152. A memory 172 is used as a work area of the DSP 162. The BB processing module 152 includes, for example, a function of the layer 2 or the like in the transmitting unit 104 and the receiving unit 101, the function of the power ratio storage unit 102, and the function of the feedback information acquiring unit 103 in Fig. 11. All or some of the functions of the power ratio storage unit 102 and the functions of the feedback information acquiring unit 103 may be included in the device control module 153.

The device control module 153 performs protocol processing of the IP layer, processing of various kinds of applications, and the like. A processor 163 is a processor that performs processing performed by the device control module 153. A memory 173 is used as a work area of the processor 163. Further, the processor 163 performs reading and writing of data with a USIM via the USIM slot 154.

### <Base station eNB>

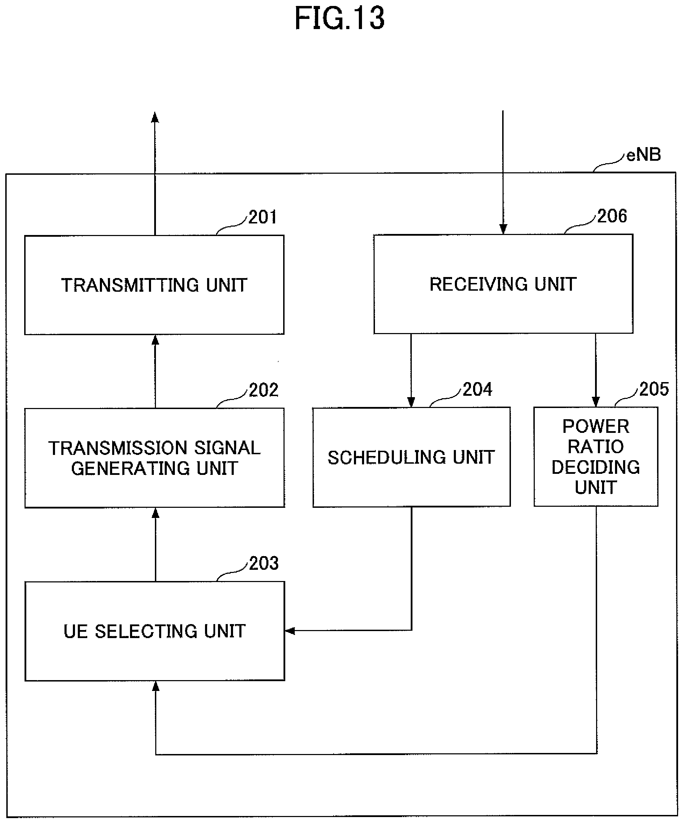

Fig. 13 illustrates the functional configuration diagram of the eNB. As illustrated in Fig. 13, the eNB includes a transmitting unit 201, a transmission signal generating unit 202, a UE selecting unit 203, a scheduling unit 204, a power ratio deciding unit 205, and a receiving unit 206. Fig. 13 illustrates only the functional units of the base station eNB particularly related to the embodiment of the present invention, and functions (not illustrated) of performing at least operations conforming with LTE are also provided.

In the eNB illustrated in Fig. 13, the scheduling unit 204 performs the scheduling operation, selects a pair of UEs, and notifies the UE selecting unit 203 of the pair of UEs. The UE selecting unit 203 transfers information bits of each of the selected pair of UEs to the transmission signal generating unit 202.

The transmission signal generating unit 202 has, for example, a precoding function, a modulation function, and an encoding function. In the transmission signal generating unit 202, the information bits of each of the pair of UEs are input to the encoding function. The encoding function performs channel encoding on the information bits and outputs encoded bits to the modulation function. The modulation function performs modulation so that a signal obtained by combining the encoded bits of the respective UEs is mapped on a constellation, and outputs a modulated signal to the precoding function. The precoding function performs precoding on the modulated signal, and outputs a resulting signal to the transmitting unit 201. The transmitting unit 201 generates a radio signal from the precoded modulated signal and transmits the radio signal.

The power ratio deciding unit 205 decides the power ratio used for the CSI calculation by the above-described method. The receiving unit 206 includes a function of receiving various kinds of uplink signals (including the CSI) from the UE and acquiring information of the higher layer from received signals of the physical layer. Further, when a notification of the power ratio is given to the UE, transmission is performed through the process at the transmission side using the power ratio as the information bits.

The entire configuration of the eNB illustrated in Fig. 13 may be implemented by a hardware circuit (for example, one or more IC chips), and a part of the configuration of the eNB may be implemented by a hardware circuit, and the remaining parts thereof may be implemented by a CPU and a program.

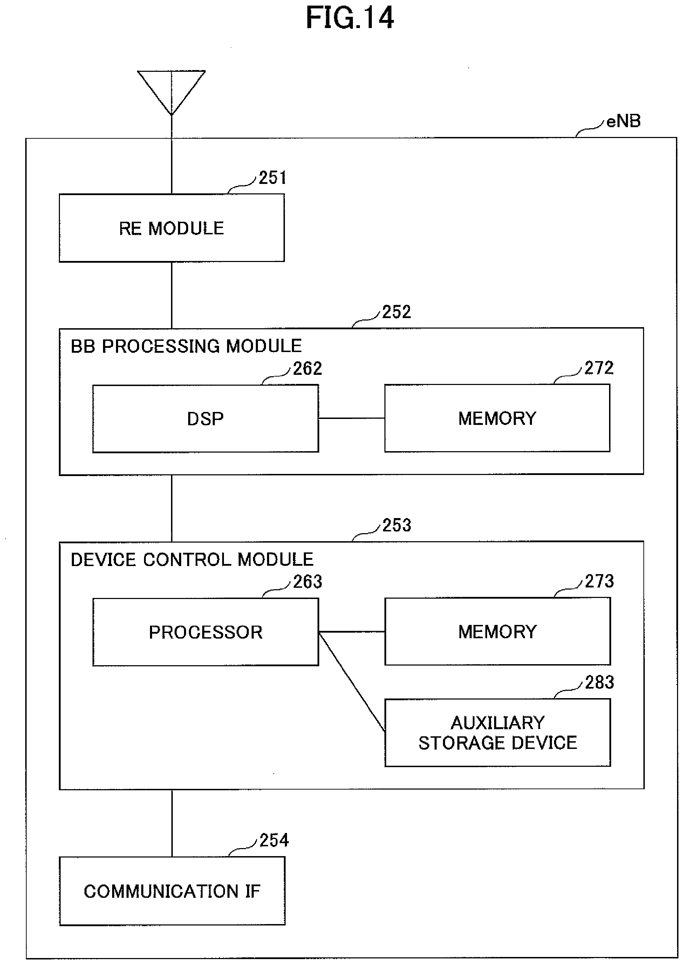

Fig. 14 is a diagram illustrating an example of a hardware (HW) configuration of the eNB. Fig. 14 illustrates a configuration that closer to an implementation example than Fig. 13. As illustrated in Fig. 14, the eNB includes an RE module 251 that performs processing relating to radio signals, a BB processing module 252 that performs baseband signal processing, a device control module 253 that performs processing of the higher layer, or the like, and a communication IF 254 serving as an interface for a connection with a network.

The RE module 251 performs D/A conversion, modulation, frequency transform, power amplification, and the like on digital baseband signals received from the BB processing module 252 and generates radio signals to be transmitted from an antenna. Further, the RE module 251 performs frequency transform, A/D conversion, demodulation, and the like on radio signals received from the antenna, generates digital baseband signals, and transfers the digital baseband signals to the BB processing module 252. For example, the RE module 251 includes functions of the physical layer or the like in the transmitting unit 201 and the receiving unit 206 of Fig. 13.

The BB processing module 252 performs a process of converting an IP packet into a digital baseband signal and vice versa. A DSP 262 is a processor that performs signal processing in the BB processing module 252. A memory 272 is used as a work area of the DSP 252. The BB processing module 252 includes, for example, functions of the layer 2 in the transmitting unit 201 and the receiving unit 206, the transmission signal generating unit 202, the UE selecting unit 203, the scheduling unit 204, and the power ratio deciding unit 205 in Fig. 13. All or some of the functions of the transmission signal generating unit 202, the UE selecting unit 203, the scheduling unit 204, and the power ratio deciding unit 205 may be included in the device control module 253.

The device control module 253 performs protocol processing of the IP layer, OAM processing, and the like. A processor 263 is a processor that performs processing performed by the device control module 253. A memory 273 is used as a work area of the processor 263. An auxiliary storage device 283 is, for example, an HDD or the like, and stores various kinds of configuration information and the like used for an operation of the base station eNB.

The configurations (functional classifications) of the devices illustrated in Figs. 11 to 14 are merely examples of the configuration for implementing the process described in the present embodiment. An implementation method (a specific arrangement, names, and the like of the functional units) is not limited to a specific implementation method as long as the process described in the present embodiment can be performed.

### (Summary of embodiment)

As described above, according to the present embodiment, provided is a base station used in a radio communication system in which multiplexing in a power region is performed, including: a transmitting unit that transmits a power ratio used for a user equipment to calculate channel state information to the user equipment; and a receiving unit that receives the channel state information calculated using the power ratio from the user equipment.

Through the above configuration, the base station can appropriately estimate the reception quality in the user equipment in the radio communication system in which multiplexing in a power region is performed.

The base station may include a scheduling unit that performs scheduling based on the channel state information calculated using the power ratio. Through this configuration, the base station can perform appropriate scheduling based on an appropriate reception quality estimation result.

The transmitting unit may transmit a plurality of power ratios to the user equipment, and the receiving unit may receive a plurality of pieces of channel state information calculated based on the plurality of power ratios. Through this configuration, it is possible to acquire the channel state information corresponding to various power ratios.

The base station may include a power ratio deciding unit that decides a power ratio that is highly likely to be allocated when the user equipment is a target of the multiplexing in the power region. Through this configuration, it is possible to notify the user equipment of an appropriate power ratio which is highly likely to be allocated as the power ratio of the channel state information.

The power ratio deciding unit may decide the power ratio based on the channel state information reported from the user equipments in the past. Through this configuration, it is also possible to notify the user equipment of an appropriate power ratio which is highly likely to be allocated as the power ratio of the channel state information.

Further, according to the present embodiment, provided is a user equipment used in a radio communication system in which multiplexing in a power region is performed, including: a receiving unit that receives a power ratio used for calculating channel state information from a base station; and a transmitting unit that calculates the channel state information using the power ratio and transmits the channel state information to the base station.

Through the above configuration, the base station can appropriately estimate the reception quality in the user equipment in the radio communication system in which multiplexing in a power region is performed.

The receiving unit may receive a plurality of power ratios from the base station, and the transmitting unit may transmit a plurality of pieces of channel state information calculated based on the plurality of power ratios to the base station. Through this configuration, the base station can acquire the channel state information corresponding to various power ratios.

When the receiving unit does not receive the power ratio from the base station, the transmitting unit may transmit the channel state information calculated without using the power ratio to the base station. Through this configuration, the base station can perform scheduling even when the notification of the power ratio is not given.

The exemplary embodiments of the present invention have been described above, but the disclosed invention is not limited to the above embodiments, and those skilled in the art would understand that various modified examples, revised examples, alternative examples, substitution examples, and the like can be made. In order to facilitate understanding of the invention, specific numerical value examples have been used for description, but the numerical values are merely examples, and certain suitable values may be used unless otherwise stated. The classification of items in the above description is not essential to the present invention. matters described in two or more items may be combined and used as necessary, and a matter described in one item may be applied to a matter described in another item (unless inconsistent). The boundary between functional units or processing units in a functional block diagram does not necessarily correspond to the boundary between physical parts.

Operations of a plurality of functional units may be performed physically by one component, or an operation of one functional unit may be performed physically by a plurality of parts. For the sake of convenience of description, the base station eNB and the user equipment UE have been described using the functional block diagrams, but such devices may be implemented by hardware, software, or a combination thereof. Software executed by the processor included in the user equipment UE according to the embodiment of the present invention and software executed by the processor included in the base station eNB according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

### <Supplement of embodiment>

The transmission of information is not limited to the aspects/embodiments described in the specification and may be performed by other means. For example, the transmission of information may be performed by physical layer signaling (for example, downlink control information (DCI) or uplink control information (UCI)), higher layer signaling (for example, radio resource control (RRC) signaling, medium access control (MAC) signaling, or broadcast information (a master information block (MIB) and a system information block (SIB))), another signal, or a combination thereof. The RRC signaling may be also referred to as an RRC message and may be, for example, an RRC connection setup message or an RRC connection reconfiguration message.

Each aspect/embodiment described in the specification may be applied to systems using Long Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), and other suitable systems and/or next-generation systems that have functionality enhanced based on these systems.

Determination or decision may be made based on a value (0 or 1) represented by 1 bit, may be made based on a true or false value (boolean: true or false), or may be made based on comparison with a numerical value (for example, comparison with a predetermined value).

The terms described in the specification and/or terms necessary to understand the specification may be replaced with terms that have same or similar meanings. For example, a channel and/or a symbol may be a signal. A signal may be a message.

The UE may be referred to, by those skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

The aspects/embodiments described in the specification may be individually used, may be combined, or may be switched during execution. In addition, transmission of predetermined information (for example, transmission of "being X") is not limited to being performed explicitly, but may be performed implicitly (for example, the transmission of the predetermined information is not performed).

The terms "determining" and "deciding" used in the specification include various operations. The terms "determining" and "deciding" can include, for example, "determination" and "decision" for calculating, computing, processing, deriving, investigating, looking-up (for example, looking-up in a table, a database, or another data structure), and ascertaining operations. In addition, the terms "determining" and "deciding" can include "determination" and "decision" for receiving (for example, information reception), transmitting (for example, information transmission), input, output, and accessing (for example, accessing data in a memory) operations. The terms "determining" and "deciding" can include "determination" and "decision" for resolving, selecting, choosing, establishing, and comparing operations. That is, the terms "determining" and "deciding" can include "determination" and "decision" for any operation.

The term "based on" used in the specification does not mean "only based on" unless otherwise stated. In other words, the term "based on" means both "only based on" and "at least based on".

In the processes, sequences, and flowcharts, etc., in each aspect/embodiment described in the present specification, the order of processes may be exchanged, as long as there is no inconsistency. For example, for the methods described in the present specification, elements of the various steps are presented in an exemplary order and are not limited to the presented specific order.

The input/output information, etc., may be stored in a specific location (e.g., a memory), or may be managed by a management table. The input/output information, etc., may be overwritten, updated, or added. The output information, etc., may be deleted. The input information, etc. may be transmitted to another device.

Reporting of predetermined information (e.g., reporting of "being X") is not limited to explicit reporting, but also it may be implicitly performed (e.g., not performing reporting of the predetermined information).

The information, the signal, and the like described in the specification may be represented using any of various technologies. For example, the data, the instruction, the command, the information, the signal, the bit, the symbol, the chip, and the like mentioned throughout the description may be represented by a voltage, a current, an electromagnetic wave, a magnetic field, or a magnetic particle, an optical field or a photon, or any combination thereof.

The present invention is not limited to the above embodiments, and various modifications, modifications, alternatives, substitutions, and the like are included in the present invention without departing from the spirit of the present invention.

This patent application is based upon and claims the benefit of priority of Japanese Patent Application No. 2016-020329 filed on February 4, 2016 and the entire contents of Japanese Patent Application No. 2016-020329 are incorporated herein by reference.

### EXPLANATIONS OF LETTERS OR NUMERALS

- UE: user equipment
- eNB: base station
- 101: receiving unit
- 102: power ratio storage unit
- 103: feedback information generating unit
- 104: transmitting unit
- 152: BB processing module
- 153: device control module
- 154: USIM slot
- 201: transmitting unit
- 202: transmission signal generating unit
- 203: UE SELECTING UNIT
- 204: scheduling unit
- 205: power ratio deciding unit
- 206: receiving unit
- 251: RE module
- 252: BB processing module
- 253: device control module
- 254: communication IF

## Claims

1. A base station used in a radio communication system in which multiplexing in a power region is performed, comprising:
a transmitting unit that transmits a power ratio used for a user equipment to calculate channel state information to the user equipment; and
a receiving unit that receives the channel state information calculated using the power ratio from the user equipment.

2. The base station according to claim 1, further comprising,
a scheduling unit that performs scheduling based on the channel state information calculated using the power ratio.

3. The base station according to claim 1 or 2,
wherein the transmitting unit transmits a plurality of power ratios to the user equipment, and the receiving unit receives a plurality of pieces of channel state information calculated based on the plurality of power ratios.

4. The base station according to any one of claims 1 to 3, further comprising,
a power ratio deciding unit that decides a power ratio that is highly likely to be allocated when the user equipment is a target of the multiplexing in the power region.

5. The base station according to claim 4,
wherein the power ratio deciding unit decides the power ratio based on the channel state information reported from the user equipment in the past.

6. A user equipment used in a radio communication system in which multiplexing in a power region is performed, comprising:
a receiving unit that receives a power ratio used for calculating channel state information from a base station; and
a transmitting unit that calculates the channel state information using the power ratio and transmits the channel state information to the base station.

7. The user equipment according to claim 6,
wherein the receiving unit receives a plurality of power ratios from the base station, and the transmitting unit transmits a plurality of pieces of channel state information calculated based on the plurality of power ratios to the base station.

8. The user equipment according to claim 6 or 7,
wherein when the receiving unit does not receive the power ratio from the base station, the transmitting unit transmits the channel state information calculated without using the power ratio to the base station.

9. A power ratio application method performed by a base station used in a radio communication system in which multiplexing in a power region is performed, comprising:
a transmission step of transmitting a power ratio used for a user equipment to calculate channel state information to the user equipment; and
a reception step of receiving the channel state information calculated using the power ratio from the user equipment.

10. A channel state information transmission method performed by a user equipment used in a radio communication system in which multiplexing in a power region is performed, comprising:
a reception step for receiving a power ratio used for calculating channel state information from a base station; and
a transmission step of calculating the channel state information using the power ratio and transmitting the channel state information to the base station.
